(19) Europäisches Patentamt
European Patent Office
Office européen des brevets

(11) **EP 3 113 371 A1**

(12) **EUROPEAN PATENT APPLICATION**

(43) Date of publication:
04.01.2017 Bulletin 2017/01

(51) Int Cl.:
*H04B 1/28* (2006.01)  *H04N 5/44* (2006.01)
*H04N 7/10* (2006.01)

(21) Application number: 16176799.1

(22) Date of filing: 29.06.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 01.07.2015 ES 201500499

(71) Applicant: **Televés, S.A.**
**15706 Santiago de Compostela (ES)**

(72) Inventors:
• BLANCO QUEIRO, Elisardo
15706 Santiago de Compostela (ES)
• FERNANDEZ CARNERO, José Luis
15706 Santiago de Compostela (ES)

(74) Representative: **Dosterschill, Peter**
**Patentanwalt,**
**Fichtenstrasse 11**
**85570 Ottenhofen (DE)**

(54) **SYSTEM FOR AMPLIFYING TELECOMMUNICATION SIGNALS**

(57) The present invention relates to a system for amplifying a telecommunication signal, comprising a telecommunication signal input (IN) consisting of a plurality of television channels (c1, c2, ..., cn) located on first frequencies, an input filter (1) that filters a bandwidth of the input signal, an input amplifier (2) that amplifies the level of the input signal, an analog-to-digital converter (3) that samples the signal into a number of samples, a splitter (4), at least one filtering element (5), a mixer (6), a further digital-to-analogue converter (7) and a broad-band output amplifier (8), wherein the filtering element (52) consists of a first shifting element (511) that shifts the samples corresponding to the television channels to second frequencies, a filter (52) that selects the samples corresponding to a given television channel and a second shifting element (531) that shifts the samples corresponding to the selected television channel to the first frequencies.

Fig.1

**Description**

The present invention relates to a system for amplifying telecommunication signals, in particular television and/or radio signals, according to claim 1.

Various systems for amplifying television signals for SMATV/CATV networks are currently on the market. Basically these systems are of two types: wide-band amplification systems and single channel amplification systems.

In the former case, a single band amplifier (VHF or UHF) amplifies all the channels in said band present at the amplifier input (each channel occupies 7 MHz in VHF and 8 MHz in UHF).

In the latter case the amplification system comprises the same number of amplifier modules as channels to be amplified, each amplifier module amplifying the channel for which it has been pre-tuned.

In analog television, the concept of channel (7 MHz in VHF and 8 MHZ in UHF) corresponds to a single television program, often giving rise to use of the word channel in place of the word program and vice versa. In digital television the term multiplex channel (channel or multiplex) is used, this corresponding to a bandwidth equal to that occupied by an analog channel. But unlike in the case of analog, in the case of digital the content of each channel (multiplex) is greater than one television program (typically 4 TV programs) and consequently the concepts of channel and program no longer carry the same meaning in the case of digital television.

Two problems characterize amplification systems:

Broad-band amplification systems are faced with the problem that the signal output level of the amplifier decreases as the number of channels present at the input thereof increases. This means that, with the number of television channels currently increasing, these amplification systems remain limited in use solely to small SMATV networks.

Single-channel amplification systems are capable of supplying higher signal output levels and furthermore all these output levels are independent of the channels amplified by the system. Nonetheless, the problem arises that they are not frequency agile, that is to say simple tuning of the channel to be amplified is not possible on site, the system instead having to be sent to the factory for tuning.

Spanish Patent ES2299312 B2, belonging to the applicant, describes a centralized telecommunication signal amplification unit (broad-band amplification system) comprising a plurality of active filters, a control unit, a memory and a microcontroller.

The system described comprises inputs for TV signals in the UHF and VHF bands and a user interface for programming of the parameters of the system, including the tuning frequencies of the plurality of active filters.

This centralized amplification unit includes a group of agile active channel filters in which each one of the channel filters includes an automatic gain control. Moreover, this centralized amplifier unit can be interconnected with another centralized unit or other centralized units so as to form wideband amplification systems enabling an increase in the number of amplified channels without reducing the output signal of said channels.

In the prior art relating to centralized amplification units such as the one described in Spanish Patent ES2299312 B2, the TV input signal is transmitted to the input of the various filters in parallel by splitting said signal. Once it has been filtered by each of the filters it is subsequently remixed. That signal filtering has been performed so far with tuning filters using LC resonant circuits.

Said filters, which were known as variable tuning filters and which could be active or passive, consisted of parallel inductive-capacitive resonant circuits, coupled using coupling circuits formed of inductors or capacitors in series. Parallel inductor-capacitor resonant circuits were tuned to a given frequency, i.e. the resonant frequency of the LC circuit. This tuning could be varied by varying the inductance or capacitance, usually the capacitance, for which use was conventionally made of varicap or varactor diodes, which are capable of capacitance modification between the ends thereof through the application of a voltage known as a control or tuning voltage.

Likewise, the bandwidth of the filter was modified by varying the series-connected elements, inductors or capacitors. Thus, in practical application, the capacitance of the coupling circuit was varied by applying a control voltage to the varicap diodes that formed the coupling circuit.

The assembly described consequently constituted a variable bandwidth and tuning circuit controlled using a series of control voltages.

Said control voltage values were previously calculated and stored digitally in a nonvolatile memory of the EEPROM type according to the desired standards/channel plans: CCIR, NTSC, etc.

A microcontroller was responsible for addressing the positions of said EEPROM memory and selecting the digital tuning and bandwidth values. Said digital values were converted into analog voltage values using digital-to-analog converters (DAC) and were applied to the tuning or coupling circuits.

Despite the great advantage that versatility of tuning supposes, and the possibility of retuning the filter(s) whenever the user/installer wanted, limited of course by the channels and bandwidths pre-set in the factory, said filters showed the disadvantage that their amplitude frequency response and their selectivity were limited relative to traditional L-C filters without programmable tuning, and were in no way comparable to the digital filtering/processing proposed in this patent application.

It should be noted that the ultimate aim of filtering is none other than to select the TV/TDT channels of interest which are intended to amplify and distribute, while correcting the difference in level thereof for balanced delivery to a wide-band output amplifier. Thus, to be able to achieve the objective and provide a suitable balancing margin it was necessary, at least, to provide a guard channel between the TV/TDT channels selected.

Therefore, where adjacent/consecutive TV channels were of interest these were programmed in the same filter so as not to be detrimental to the amplitude frequency response thereof, although this meant that the channels could not be treated individually and consequently no correction could be made to the gain/attenuation thereof. In fact, this margin of correction increases as the selectivity of the filter increases and its behavior improved if two or more guard channels were provided instead of one.

The object of the present invention is to provide a simpler, higher performance system for amplifying telecommunication signals, in particular radio and television signals.

This object is achieved with a system for amplifying telecommunication signals, in particular radio and television signals, as defined in the claims.

The solution provided in this patent application is completely different from traditional filtering with variable bandwidth and tuning filters using LC resonant circuits.

The input signals have hitherto been provided at the input of each and every one of the different parallel filters by splitting said signals, these being remixed once filtered by each of the filters, the number of circuit elements used thus being multiplied.

With the solution provided by the invention, all the digital processing of the signal is performed in a single processor, such that the input signal is supplied solely, without the need for splitting, to the input of a single processor, which will act on the various spectral components making up the overall signals, allowing those to pass which are of interest (i.e. filtering).

The filtering process using digital processing performed by the system for amplifying telecommunication signals, in particular radio and television signals according to the invention, is made up as follows:

1) Sampling of the spectrum of the input signals and quantization of the samples (analog-to-digital A/D conversion). The purpose of this first step it to obtain a binary stream resulting from multiplying the number of quantization bits by the sampling frequency used to obtain discrete samples from the analog input signal consisting of the different TV channels within the band of for example 174 MHz to 790 MHz in the case of terrestrial television or of 950 a 2150 MHz in the case of satellite television.

2) Conversion to baseband of each of the TV channels of interest. To do this, use is made of the same number of oscillators and frequency conversions as there are channels to be filtered. Mathematically, working with the digital stream obtained at the output of the A/D converter, the frequency of the samples of the desired channels is shifted to baseband to make filtering easier.

3) Digital filtering, well FIR-type (finite impulse response filter) or IIR-type (Infinite Impulse Response Filter), or banks of filters to select the bandwidth of the converted channel. To do this, the various coefficients which make up the filter are calculated as a function of the desired rejection requirements.

4) Conversion of the filtered channel to the original frequency or another frequency of interest. Reversing point 2), the frequency is shifted from baseband to the original frequency or any other desired frequency to obtain the desired output spectrum. As under said point 2), mathematical calculation is performed for the corresponding frequency shift.

5) Addition of all the signals to complete a new signal spectrum. Once all the TV signals/channels of interest have been filtered, they are carried to an adder, at whose output the digital signal (bit stream) made up of the signals prior to analog conversion is obtained.

6) Digital-to-analog (D/A) conversion and obtainment of filtered analog signal.

In an example according to the invention, the system for amplifying a telecommunication signal comprises a telecommunication signal input consisting of a plurality of television channels located on first frequencies, an input filter that filters a bandwidth of the input signal, in particular from 174 to 790 MHz, an input amplifier that amplifies the level of the input signal, an analog-to-digital converter that samples the signal into a number of samples, a splitter, at least one filtering element, a mixer, a digital-to-analog converter and a broad-band output amplifier, wherein the filtering element consists of a first shifting element that shifts the samples corresponding to the television channels to second frequencies, a filter that selects the samples corresponding to a given television channel and a second shifting element that shifts the samples corresponding to the selected television channel to the first frequencies. This has the advantage that any television channel of interest can be selected within the complete transmission band and without any type of previous filtering. The complete band is digitized to make all the channels available without restrictions. The problem is the high operating speed (between 1 and 12 Gbps) of the A/D converter, since working with such a large bandwidth and

EP 3 113 371 A1

with sufficient binary resolution for the distortion parameters to be acceptable requires a high binary rate as a product of multiplying the sampling frequency (which must be at least twice the bandwidth (BW) of the sampled signal to avoid aliasing of the signal) by the number of bits used for sample quantization.

In another example, the first shifting element is constituted such that it shifts the samples corresponding to the television channels using multiplication of the samples by certain coefficients to be determined.

This allows the quantized and digitized signal samples to be converted to baseband with an original frequency of zero for subsequent application of a digital low-pass filter.

In another example of the system for amplifying a telecommunication signal according to the invention, the second shifting element is constituted such that it shifts the samples corresponding to the television channels using multiplication that is the inverse of that performed by the first shifting element. The filtered and balanced samples in binary digital format are returned to their original frequency or another frequency of interest that does not have to correspond to the original for better use of the radio frequency spectrum and to obtain, for example, the lowest attenuation in the TV signal distribution network responsible for transporting the desired TV or SAT channels to the corresponding television sets and/or set top boxes.

Filters can be classified in several different groups, depending on what criteria are used for classification. The two major types of digital filters are finite impulse response digital filters (FIR filters) and infinite impulse response digital filters (IIR).

Both types have some advantages and disadvantages that should be carefully considered when designing a filter. Besides, it is necessary to take into account all fundamental characteristics of a signal to be filtered as these are very important when deciding which filter to use. In most cases, it is only one characteristic that really matters and it is whether it is necessary that filter has linear phase characteristic or not.

When a signal to be filtered is analysed in this way, it is easy to decide which type of digital filter is best to use. Accordingly, if the phase characteristic is of the essence, FIR filters should be used as they have linear phase characteristic. Such filters are of higher order and more complex, therefore. Otherwise, when it is only frequency response that matters, it is preferable to use IIR digital filters which have far lower order, i.e. are less complex, and thus much easier to realize.

The basic characteristics of Finite Impulse Response (FIR) filters are:

- linear phase characteristic;
- high filter order (more complex circuits); and
- stability.

The basic characteristics of Infinite Impulse Response (IIR) are:

- non-linear phase characteristic;
- low filter order (less complex circuits); and
- resulting digital filter has the potential to become unstable.

Both options are possible in the invention.

In one example of a system for amplifying a telecommunication signal according to the invention, the filter is a finite impulse response (FIR) filter. Said filter is composed of a series of coefficients N that determine the order of the filter and its selectivity, so the relation between the input signal x(k) and output signal y(k) is:

$$y(k) = \sum_{n=0}^{N-1} w_n x(k-n)$$

Several methods for designing FIR filters (that is, determine the order N and the values of the coefficients w0...wN-1 are:

- Impulse response truncation
- Windowing design method
- Optimal filter design methods

To obtain a given cutoff frequency, the coefficients w0...wN-1 must be appropriately chosen. Several methods can be used for calculating the value of the coefficients. In this some issues must be taken into account:

- The more filter coefficients required, the more hardware processing power required to implement in real time. Therefore, it may be desired to have as few filter weights as possible.

- The closer the filter specification is to the ideal filter, the longer the filter length is likely to be.

These filters are generated using programmable logic devices of the DSP or FPGA type and have greater linearity than analog filters, are very stable and of linear phase. They enable the desired selectivity to be achieved in accordance with the number of coefficients used.

In another example according to the invention, the system for amplifying a telecommunication signal consists of "n" filtering elements, in particular between 1 and 60 filtering elements.

The greater the number of these filtering elements, or coefficients, the greater the selectivity obtained. The result obtained is the fruit of the convolution in the time domain of the input signal by a signal defined by the number of coefficients that define the filter. Therefore, the greater the number of coefficients, the closer we get to the ideal low-pass filter.

A practical embodiment of a system for amplifying a telecommunication signal according to the invention is described below by way of non-limiting example with reference to the attached figures.

Figure 1 shows a non-limiting example of a block diagram of a system for amplifying a telecommunication signal according to the invention.

Figure 2 shows a non-limiting example of a block diagram of a filtering module of a system according to Figure 1.

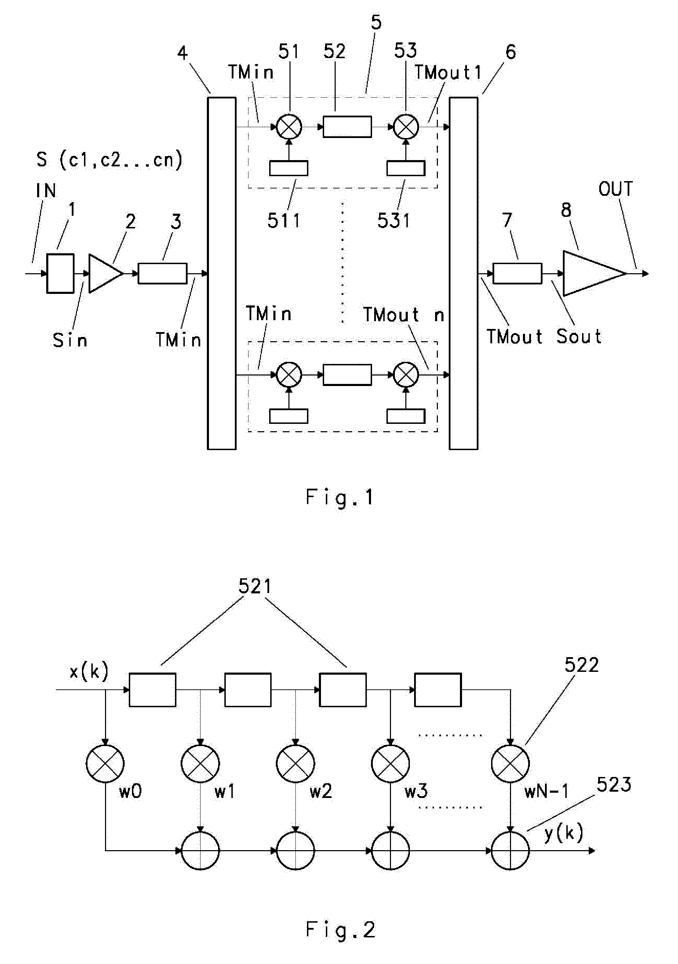

As Figure 1 shows, the system for amplifying a telecommunication signal according to the invention consists of an input IN through which a telecommunication signal S is introduced, in particular a television signal consisting of television channels (c1, c2, ..., cn) respectively located on first frequencies (f11, f12, ..., f1n). A first bandpass filter 1 limits the signal S in particular to an input signal Sin of a given band, for example of 174 to 790 MHz in the case of terrestrial television or of 950 MHz to 2150 MHz in the case of satellite television.

The input signal Sin is likewise made up of television channels (c1, c2, ..., cn) respectively located on first frequencies (f11, f12, ..., f1n). A first amplifier 2 increases the level of the input signal Sin to a level sufficient for it to be processed. Then an analog-to-digital converter 3 obtains samples of the spectrum of the input signal Sin and quantizes them. The result is thus a binary stream TMin consisting of "m" samples that is the result of multiplication of the number of bits used for quantization of each sample by the number of samples. Taking account of the fact that according to the Nyquist theorem the sampling rate must be at least twice the bandwidth (BW) of the sampled signal, the following is obtained:

$$\text{Binary stream} = 2 \times \text{BW} \times \text{number of quantization bits}.$$

The bandwidth BW of the sampled signal Sin will for example be 616 MHz (174 MHz to 790 MHz) in the case of terrestrial TV channels or 1.200 MHz (950 to 2150 MHz) in the case of satellite television.

Once the samples of the signal Sin have been obtained and quantized, the binary stream TMin thereof is introduced via a splitter 4 to the various filtering elements 5.

The number r of filtering elements 5 will be related to the number "n" of television channels (c1, c2, ..., cn) in a ratio of not necessary equal to one filtering element 5 for each television channel to be filtered; the number "r" of filtering elements is not necessary the same as the number "n" of channels.

At the input of each filtering element 5 the binary stream TMin of the signal Sin undergoes band shifting such that the channels (c1, c2, ..., cn) located on first frequencies (f11, f12, ..., f1n) occupy frequencies (f21, f22, ..., f2n) respectively. Said shifting is produced by the first mixer 51 and the first shifting element 511, that consists of, for example, a digital direct synthesizer DSS. A Direct digital synthesizer (DDS) is a type of frequency synthesizer used for creating arbitrary waveforms from a single, fixed-frequency reference clock, and so here could be used as a local oscillator for converting the channel(s) selected to baseband.

Both elements mixer 51 and first shifting element 511 belongs to the filtering element 5. This shifting is obtained by mathematical operation using binary stream TMin multiplication of the signal Sin.

Then the digital filter 52 of the corresponding filtering element 5 selects the samples corresponding to the selected television channel ck, being k a number between 1 and n. To do this, the various coefficients w0...wN-1 which make up the filter are calculated as a function of the desired rejection requirements. Each digital filter 52 can adjust its attenuation in accordance with the amplitude applied to the different calculated coefficients.

In general, the frequency of the binary stream TMin of the signal Sin is shifted to baseband to facilitate implementation of the digital filtering carried out by the digital filter 52.

Then, by inverse operation using the second mixer 53 and the second shifting element 531 (consisting for example of a digital direct synthesizer DSS), the binary stream TMk , being k a number between 1 and n, now exclusively of the filtered channel ck, undergoes band shifting such that the selected channel ck occupies its original first frequency f1k. As before, this shifting is obtained mathematically using binary stream TMk multiplication of the filtered channel ck. Then, the various binary streams TMk corresponding to the filtered channels ck in the various filtering elements 5 are added in a mixer 6, so obtaining a binary stream TMout corresponding to an output signal Sout.

Then, the binary stream TMout thus obtained is introduced into a digital-to-analog converter 7 which generates the output signal Sout from the binary stream TMout. Said signal Sout corresponds to the filtered input signal Sin. The signal Sout will be composed of those television channels ck selected from among the television channels (c1, c2, ..., cn) present in the input signal Sin. The output signal Sout is finally amplified by an amplifier 8, so obtaining at the output OUT the signal Sout at the desired level.

Figure 2 shows a non-limiting example of a block diagram of a digital filter 52 of a system for amplifying telecommunication signals according to the invention.

As may be seen from said figure, the digital filter 52 is implemented using a finite response filter for example of the FIR type, which consists (for example) of 5 coefficients and of retarder elements 521, multipliers 522 and adders 523. The multipliers 522 use a series of a number N of previously calculated coefficients: w0....wN-1.

The quantized signal samples converted to baseband using the shifting element 511 and the corresponding first mixer 51 thereof enter the digital filter 52. The various samples that make up the input signal, transferred to baseband x(k)... x(k-n), are multiplied, using the multipliers 522, by the coefficients w0....wN-1, the value and number of which will depend in each case on the selectivity value it is desired to achieve, and subsequently are added together in the adders 523. The process is as follows, by way of example: the first sample is multiplied by the first coefficient, the second sample, after being retarded, is multiplied by the second coefficient and added together with the previous one, and thus successively until the number of coefficients is finished. The process of multiplication and adding is repeated for all the samples that make up the input signal. At the outlet of the digital filter 52 the sum of the multiplications is obtained, being N the number of coefficients:

$$y(k) = \sum_{n=0}^{N-1} w_n x(k-n)$$

which in the case of, for example, order N=7 coefficients is

$$y(k) = w_0 x(k) + w_1 x(k-1) + w_2 x(k-2) + w_3 x(k-3) + w_4 x(k-4) \\ + w_5 x(k-5) + w_6 x(k-6)$$

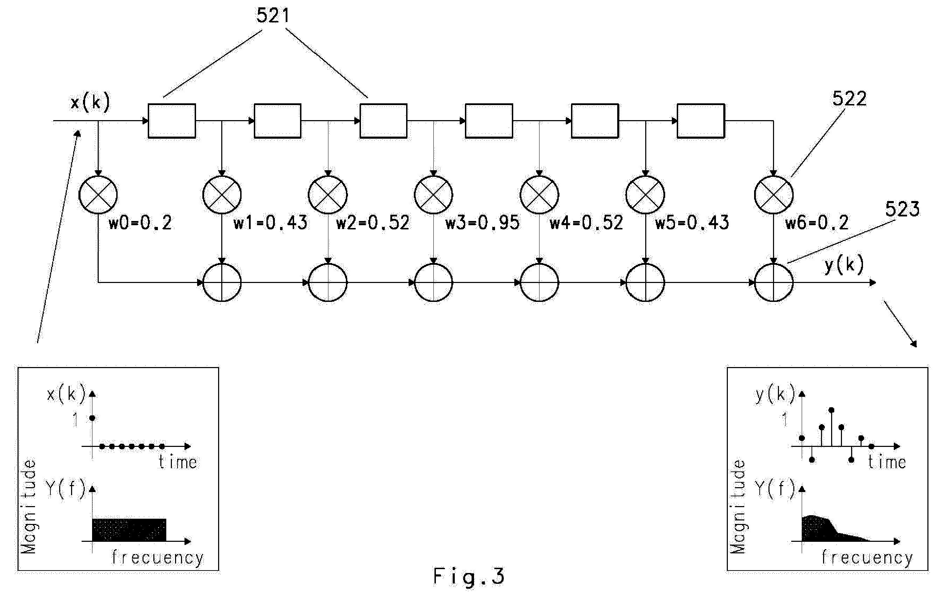

Figure 3 shows an example of a FIR- filter low pass-filter of order N=7, whose coefficients w are w0=w6=0,2, w1=w5=0,42,w2=w4=0,53, w3=0,95

List of reference signs

| | |
|---|---|
| IN | signal input |
| OUT | signal output |
| S | telecommunication signal |
| Sin | input signal |
| Sout | output signal |
| TMin | binary stream of signal Sin |
| TMout | binary stream of signal Sout |
| (c1, c2, ..., cn) | television channels that form the signal S |
| (f11, f12, ..., f1 n) | first frequencies of the television channels (c1, c2, ..., cn) |
| (f21, f22, ..., f2n) | second frequencies of the television channels (c1, c2, ..., cn) |
| TMk | binary stream of the selected/filtered channel |
| ck | selected/filtered television channel |
| f1k | first frequency of selected/filtered television channel |

| | |
|---|---|
| f2k | second frequency of selected/filtered television channel |
| 1 | input filter |
| 2 | input amplifier |
| 3 | analog-to-digital converter |
| 4 | splitter |
| 5 | filtering element |
| 51 | first mixer |
| 511 | first shifting element |
| 52 | digital filter |
| 521 | retarder elements |
| 522 | multipliers |
| 523 | adders |
| 53 | second mixer |
| 531 | second shifting element |
| 6 | mixer |
| 7 | digital-to-analog converter |
| 8 | signal amplifier, broad-band output amplifier |
| w0, .... wN-1 | coefficients of multiplication |
| BW | bandwidth of sampled signal Sin |
| r | number of filtering elements 5 |
| m | number of samples of the analog to digital conversion |

**Claims**

1. System for amplifying a telecommunication signal, comprising

   - a telecommunication signal (S) input (IN) consisting of a plurality of television channels (c1, c2, ..., cn) located on first frequencies (f11, f12, ..., f1 n),
   - an input filter (1) that filters a bandwidth of the input signal (S), in particular 174 to 790 MHz,
   - an input amplifier (2) that amplifies the level of the input signal (S),
   - an analog-to-digital converter (3) that samples the signal (S) into a number of samples (m),
   - a splitter (4),
   - at least one filtering element (5),
   - a mixer (6),
   - a digital-to-analog converter (7),
   - an outlet amplifier (8),

   **characterised in that**

   - the filtering element (5) consists of a first shifting element (511) that shifts the samples (m) corresponding to the television channels (c1, c2, ..., cn) to second frequencies (f21, f22, ..., f2n), a filter (52) that selects the samples corresponding to a given television channel (c1.....cn) and a second shifting element (531) that shifts the samples corresponding to the selected television channel (c1......cn) to the first frequencies (f11, f12, ..., f1 n).

2. Amplification system according to claim 1, **characterized in that** the first shifting element (511) is constituted such that it shifts the samples (m) corresponding to the television channels (c1, c2, ..., cn) by multiplying the samples (m) with coefficients (w0,..., wN-1).

3. Amplification system according to claim 2, **characterized in that** the second shifting element (531) is constituted such that it shifts the samples (m) corresponding to the television channels (c1...cn) using multiplication which is the inverse of that performed by the first shifting element (511).

4. Amplification system according to the preceding claims **characterized in that** the filter (52) is a FIR filter.

5. System according to any one of the preceding claims, **characterized in that** it consists of "r" filtering elements (5), in particular between 1 and 60 filtering elements (5).

Fig.1

Fig.2

Fig.3

Europäisches
Patentamt

European
Patent Office

Office européen
des brevets

## EUROPEAN SEARCH REPORT

Application Number

EP 16 17 6799

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/121261 A1 (MAXLINEAR INC [US]; REDDY MADHUKAR [US]; LING CURTIS [US]; GALLAGHER T) 21 October 2010 (2010-10-21) <br> * abstract * <br> * paragraphs [0002], [0007] - [0010], [0023], [0026], [0028] - [0037] * <br> * figures 2,3,4,6-8 * | 1-5 | INV. <br> H04B1/28 <br> H04N5/44 <br> H04N7/10 |
| X | EP 0 534 255 A2 (HUGHES AIRCRAFT CO [US]) 31 March 1993 (1993-03-31) <br> * abstract * <br> * column 1, line 40 - column 2, line 31 * <br> * column 4, line 23 - page 5, line 7 * <br> * column 6, line 54 - column 7, line 15 * | 1-5 | |
| A | EP 1 030 458 A2 (TRW INC [US]) 23 August 2000 (2000-08-23) <br> * abstract * <br> * paragraphs [0002], [0003], [0005], [0012] - [0033] * <br> * figures 2,3,7 * | 1-5 | |
| A | EP 2 341 631 A1 (NXP BV [NL]) 6 July 2011 (2011-07-06) <br> * abstract * <br> * paragraphs [0002], [0004], [0008], [0013] - [0020] * | 1-5 | TECHNICAL FIELDS SEARCHED (IPC) <br><br> H04B <br> H04N |
| A,D | ES 2 299 312 A1 (TELEVES SA [ES]) 16 May 2008 (2008-05-16) <br> * abstract * <br> * page 3, line 23 - page 4, line 41 * <br> * figures 1-3 * | 1-5 | |
| A | JP 2003 125231 A (HITACHI INT ELECTRIC INC) 25 April 2003 (2003-04-25) <br> * abstract * | 1-5 | |

The present search report has been drawn up for all claims

| Place of search | Date of completion of the search | Examiner |
|---|---|---|
| Munich | 15 September 2016 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 6799

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2016

| Patent document cited in search report | | Publication date | Patent family member(s) | | Publication date |
|---|---|---|---|---|---|
| WO 2010121261 | A1 | 21-10-2010 | US 2011105068 A1 | | 05-05-2011 |
| | | | US 2014104499 A1 | | 17-04-2014 |
| | | | US 2015156444 A1 | | 04-06-2015 |
| | | | US 2015156535 A1 | | 04-06-2015 |
| | | | US 2016088337 A1 | | 24-03-2016 |
| | | | US 2016088344 A1 | | 24-03-2016 |
| | | | WO 2010121261 A1 | | 21-10-2010 |
| EP 0534255 | A2 | 31-03-1993 | DE 69228281 D1 | | 11-03-1999 |
| | | | DE 69228281 T2 | | 02-06-1999 |
| | | | EP 0534255 A2 | | 31-03-1993 |
| | | | JP H0831830 B2 | | 27-03-1996 |
| | | | JP H05218994 A | | 27-08-1993 |
| | | | US 5220557 A | | 15-06-1993 |
| EP 1030458 | A2 | 23-08-2000 | CA 2296968 A1 | | 12-08-2000 |
| | | | EP 1030458 A2 | | 23-08-2000 |
| | | | JP 2000244368 A | | 08-09-2000 |
| | | | US 6263195 B1 | | 17-07-2001 |
| EP 2341631 | A1 | 06-07-2011 | EP 2341631 A1 | | 06-07-2011 |
| | | | US 2011195683 A1 | | 11-08-2011 |
| ES 2299312 | A1 | 16-05-2008 | NONE | | |
| JP 2003125231 | A | 25-04-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2299312 B2